# EUROPEAN PATENT SPECIFICATION

(11) **EP 4 495 339 B1**
(45) Date of publication and mention of the grant of the patent: **25.11.2026**
(21) Application number: 23807367.0
(22) Date of filing: 19.04.2023
(51) Int. Cl.: E02F 9/24, E02F 9/00, E02F 9/16, F02D 29/00, F02D 29/02, B60R 25/04, B60R 25/24

(54) **CONSTRUCTION MACHINE**
BAUMASCHINE
ENGIN DE CHANTIER

(30) Priority: 20.05.2022 JP 2022083432; 20.05.2022 JP 2022083433
(43) Date of publication of application: 22.01.2025
(73) Proprietor: KOBELCO CONSTRUCTION MACHINERY CO., LTD., Hiroshima-shi, Hiroshima 731-5161 (JP)
(72) Inventor: KINOSHITA, Akira, Hiroshima-shi, Hiroshima 731-5161 (JP); NAKASHIMA, Shota, Hiroshima-shi, Hiroshima 731-5161 (JP)
(74) Representative: TBK
(86) International application number: PCT/JP2023/015564
(87) International publication number: WO 2023/223755

(56) References cited:
- JP-A- 2015 534 921
- JP-A- 2021 123 907
- JP-B2- 6 333 712
- KR-A- 20170 085 339
- KR-A- 20210 100 299
- KR-A- 20210 100 299
- US-A1- 2019 089 043

## Description

### Technical Field

The present invention relates to a construction machine with a portable key for bringing a drive source into a startup-operation available state.

### Background Art

JP 6 333712 B2 (Patent Literature 1) discloses a technique for enabling an operator of a construction machine to bring a drive source into a startup-operation available state without inserting a key into a key hole of the construction machine. Specifically, the construction machine described in Patent Literature 1 includes a cabin, a transmission antenna, a portable key, and a controller. The transmission antenna is disposed inside the cabin and capable of transmitting a first signal. The portable key, which is carried by an operator, receives the first signal and transmits a second signal, which is an authentication signal, in response to the reception of the first signal. The controller receives the second signal and judges whether or not the portable key corresponds to the construction machine. When judging the portable key to correspond to the construction machine, the controller brings the drive source of the construction machine into a startup-operation available state. The startup-operation available state is a state where an operation for starting up the drive source is available, in which state the driver can start the drive source by turning on a main switch of the construction machine inside the cabin.

The transmission range of the first signal by the transmission antenna is set to allow the first signal to reach the portable key carried by an operator inside the cabin. Specifically, the output of the transmission antenna is set to be large enough to allow the first signal to spread all over the cabin interior space.

In the construction machine, if the first signal transmitted from the transmission antenna leaks out of the cabin, the transmission and the reception of the first and second signals may be established between the portable key and the controller, in spite that the person carrying the portable key is outside the cabin, to bring the construction machine into the start-operation available state. Specifically, there is a concern that the main switch might be unexpectedly turned on in spite that a person not having the portable key is inside the cabin or in other unexpected case. This causes the drive source to start against the intention of the operator, involving problems related to safety such as unexpected movement of the construction machine. The concern grows more serious when an opening provided in the cabin, for example, an entrance or a window, is opened.

### Citation List

### Patent Literature

Patent Literature 1: JP 6 333712 B2 (disclosing a construction machine according to the preamble of claim 1).

KR 2021 0100299 A discloses a cabin, where a first antenna is attached to an inner wall of the cabin, and a second antenna is attached to an outer wall the cabin.

### Summary of Invention

It is an object of the present invention to provide a construction machine including a cabin and a portable key, the construction machine being capable of restraining the construction machine from unexpected movement with the portable key outside the cabin.

The object is achieved with a construction machine according to claim 1. Further advantageous developments of the invention are subject-matter of the dependent claims.

### Brief Description of Drawings

FIG. 1 is a perspective view of a hydraulic excavator, which is a construction machine according to a first embodiment of the present invention.
FIG. 2 is a perspective view of a cabin included in the hydraulic excavator.
FIG. 3 is a block diagram showing a control system installed on the hydraulic excavator.
FIG. 4 is a flowchart showing a process to be performed by the portable-key control part included in the control system.
FIG. 5 is a flowchart showing a process to be performed by the authentication part included in the control system.
FIG. 6 is a flowchart showing a process to be performed by the startup control part included in the control system.
FIG. 7 is a perspective view showing the position of a first signal transmission antenna included in the control system.
FIG. 8 is a perspective view showing an enlarged cross section along the VIII-VIII line shown in FIG. 7.
FIG. 9 is a perspective view showing the position of a first signal transmission antenna according to a first modification of the first embodiment.
FIG. 10 is a perspective view showing the position of a first signal transmission antenna according to a second modification of the first embodiment.
FIG. 11 is a front view showing an enlarged cross section along the XI-XI line shown in FIG. 10.
FIG. 12 is a perspective view showing the position of a first signal transmission antenna according to a third modification of the first embodiment.
FIG. 13 is a front view showing an enlarged cross section along line XIII-XIII shown in FIG. 12.
FIG. 14 is a perspective view showing the position of a first signal transmission antenna according to a second embodiment of the present invention.
FIG. 15 is an enlarged cross-sectional view showing a cross section along line XV-XV shown in FIG. 14.
FIG. 16 is a perspective view showing the position of a first signal transmission antenna according to a third embodiment of the present invention.
FIG. 17 is a perspective view showing the position of a first signal transmission antenna according to a fourth embodiment of the present invention.
FIG. 18 is a perspective view showing the position of a first signal transmission antenna according to a fifth embodiment of the present invention.
FIG. 19 is a perspective view showing the position of a first signal transmission antenna according to a technique different from the technique disclosed in FIGS. 1 to 18.
FIG. 20 is a cross-sectional side view showing the position of the first signal transmission antenna shown in FIG. 19.
FIG. 21 is a front view showing the position of a first signal transmission antenna shown in FIG. 19.
FIG. 22 is a perspective view showing the position of a first signal transmission antenna according to a technique different from the technique disclosed in FIGS. 1 to 2.
FIG. 23 is a cross-sectional side view showing the position of the first signal transmission antenna shown in FIG. 22.
FIG. 24 is a front view showing the position of the first signal transmission antenna shown in FIG. 22.

### Detailed Description

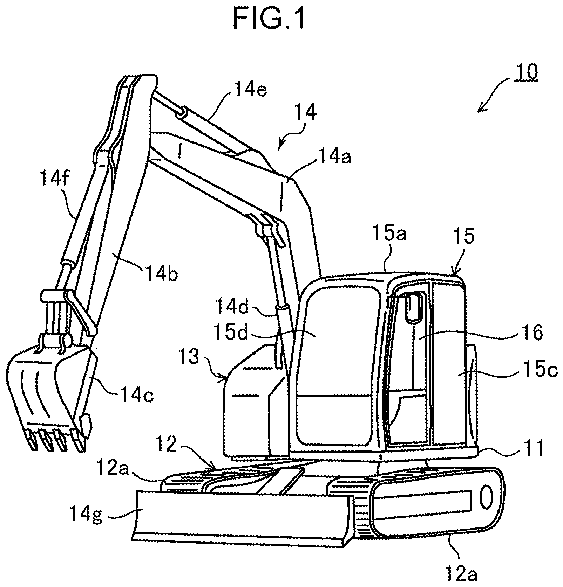

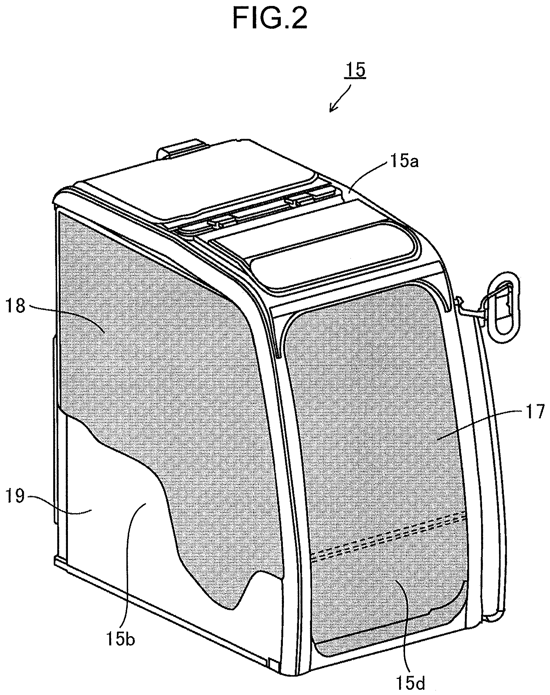

Hereinafter will be described embodiments of the present invention in detail based on the drawings. FIG. 1 is a perspective view of a hydraulic excavator 10 according to a first embodiment of the present invention viewed from a left side. FIG. 2 is a perspective view of a cabin 15 included in the hydraulic excavator 10 and taken out therefrom, viewed from the right front.

The hydraulic excavator 10 is a construction machine mainly performing excavation work, including a crawler type of lower traveling body 12, an upper turning body 13 mounted on the lower traveling body 12 through a turning mechanism, and a work device 14 attached to the upper turning body 13.

The lower traveling body 12 has a pair of crawlers 12a. The upper turning body 13 is mounted on the lower traveling body 12 capably of turning with respect to the lower traveling body 12 around a turning axis extending vertically. The upper turning body 13 includes a turning frame 11 extending horizontally, the turning frame 11 serving as the body frame according to the present invention. The turning frame 11 is capable of turning with respect to the lower traveling body 12; however, the body frame according to the present invention has not to be capable of turning. The turning frame 11 has a frame front-rear direction and a frame width direction. The frame front-rear direction is the front-rear direction of the turning frame 11. The frame width direction is the width direction of the turning frame 11, being orthogonal to the frame front-rear direction.

The work device 14 is capable of performing a working motion, which is a motion for performing a construction work including the excavation work. The work device 14 includes a boom 14a, an arm 14b, a bucket 14c and a plurality of hydraulic cylinders.

The boom 14a has a proximal end and a distal end opposite thereto, and the proximal end is coupled to the turning frame 11 through a boom pivot. The boom pivot extends in a direction parallel to the frame width direction, allowing the boom 14a to swing vertically about the boom pivot with respect to the turning frame 11. The boom 14a extends upward from the proximal end and further extends forward to the tip with the change in the orientation thereof in the middle.

The arm 14b has a proximal end and a distal end opposite thereto, and the proximal end is coupled to the distal end of the boom 14a through an arm pivot. The arm pivot extends in a direction parallel to the frame width direction, allowing the arm 14b to swing vertically about the arm pivot with respect to the boom 14a. The arm 14b extends straight forward or downward from the distal end of the boom 14a.

The bucket 14c is rotatably coupled to the distal end of the arm 14b through a bucket pivot. The bucket pivot extends in a direction parallel to the frame width direction, allowing the bucket 14c to swing vertically about the bucket pivot with respect to the arm 14b.

The plurality of hydraulic cylinders include a boom cylinder 14d, an arm cylinder 14e, and a bucket cylinder 14f. The boom cylinder 14d is arranged capably of swinging the boom 14a around the boom pivot. The arm cylinder 14e is arranged capably of swinging the arm 14b around the arm pivot. The bucket cylinder 14f is arranged capably of swinging the bucket 14c around the bucket pivot.

The upper turning body 13 further includes a cabin 15. The cabin 15 is mounted on the turning frame 11 and allows an operator to get in the cabin 15. The cabin 15 is disposed at a position biased to one side in the frame width direction (the left side of the turning frame 11, the right side in FIG. 1) with respect to a widthwise frame center line of the turning frame 11. The widthwise frame center line is the center line of the turning frame 11 in the frame width direction, extending in the frame front-rear direction.

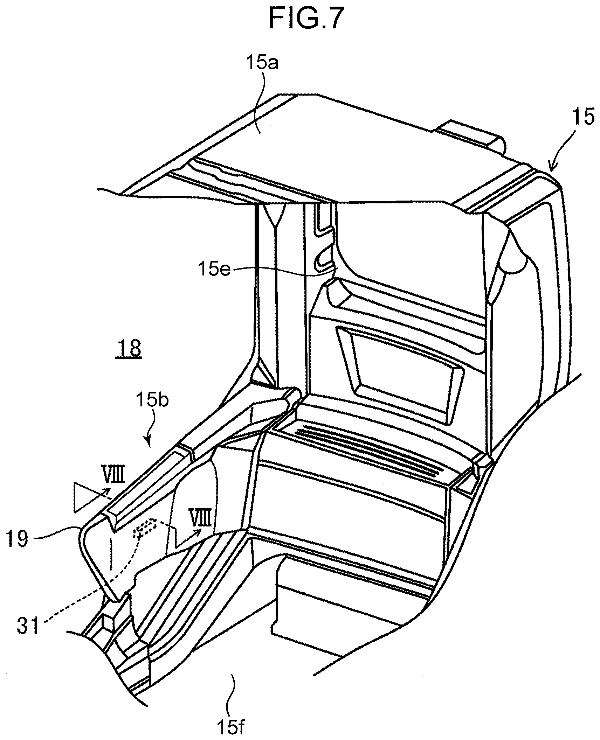

The cabin 15 is a closed box-shaped body defining a cabin interior space, which is a space for receiving an operator. The cabin 15 includes a plurality of cabin walls defining the cabin interior space. The plurality of cabin walls include a top wall 15a, a right side wall 15b, a left side wall 15c, a front wall 15d, a back wall 15e and a floor wall 15f, which are located on the upper side, the right side, the left side, the front side, the lower side, and the rear side of the cabin interior space, respectively. The back wall 15e and the floor wall 15f are shown in FIG. 7. At least a part of the plurality of cabin walls includes a wall body formed with an opening, and a lid member to close the opening. The cabin 15 according to the present embodiment, thus, includes at least one opening. In the cabin interior space are disposed a plurality of operation devices for operating the hydraulic excavator 10, including an operation seat, an operation lever, a main switch, instruments, a main controller, a transmission antenna, a reception antenna and the like. The operation seat allows an operator to sit on the operation seat. To secure the field of view of the operator sitting on the operation seat, the wall body of at least a part of the plurality of cabin walls is formed with a window, which is an opening to be closed by a transparent plate serving as the lid member. The transparent plate is made of, for example, a glass plate, forming a non-shielding part. The non-shielding part allows electromagnetic waves constituting each of the below-described first signal and second signal to pass through the non-shielding part.

The right side wall 15b and the left side wall 15c included in the plurality of cabin walls of the cabin 15 correspond to a pair of cabin side walls opposed to each other in the frame width direction across the cabin interior space for receiving the operator. Specifically, the left side wall 15c corresponds to a cabin outer side wall, and the right side wall 15b corresponds to a cabin inner side wall located closer to the widthwise frame center line than the left side wall 15c. The right side wall 15b, which is the cabin inner side wall according to the present embodiment, is located along the widthwise frame center line, and the work device 14 is adjacent to the right side wall 15b (cabin inner side wall) on the outer side thereof (in the present embodiment, the right side of the upper turning body 13; the left side in FIG. 1). The left side wall 15c, which is the cabin outer side wall, includes a side wall body formed with an entrance 15g and an entrance door 16 connected to the side wall body capably of opening and closing the entrance 15g. The entrance 15g passes through the side wall body in the frame width direction so as to allow an operator to get in and get out of the cabin interior space through the entrance 15g. The entrance door 16 is connected to the side wall body, for example, capably of rotationally moving around a vertical axis along the front end or rear end of the entrance door 16. The upper half of the entrance door 16 according to the present embodiment may be a transparent plate, for example, a glass plate, and the transparent plate may be capable of making opening and closing motions with respect to the side wall body.

In FIG. 2 is colored a portion composed of the transparent plate out of the plurality of cabin walls constituting the cabin 15. The transparent plate of the front wall 15d among the plurality of cabin walls is a windshield 17. The right side wall 15b, which is the cabin inner side wall, includes a side wall body extending along the vertical plane, and the side wall body includes a transparent plate 18 and an outer wall plate 19. The transparent plate 18 forms at least an upper half of the side wall body. The outer wall plate 19 forms a portion other than the transparent plate 18 in the side wall body, that is, a substantially lower half portion of the side wall body. The transparent plate 18 is made of, for example, a glass plate, forming a non-shielding part that transmits each of the light beam and the electromagnetic wave. The outer wall plate 19 is made of a metal plate, forming a shielding part that prevents the transmission of each of the light beam and the electromagnetic wave. The transparent plate 18 forming the non-shielding part is, thus, disposed at a position deviated from the outer wall plate 19 in a direction along the vertical surface (upward in the present embodiment).

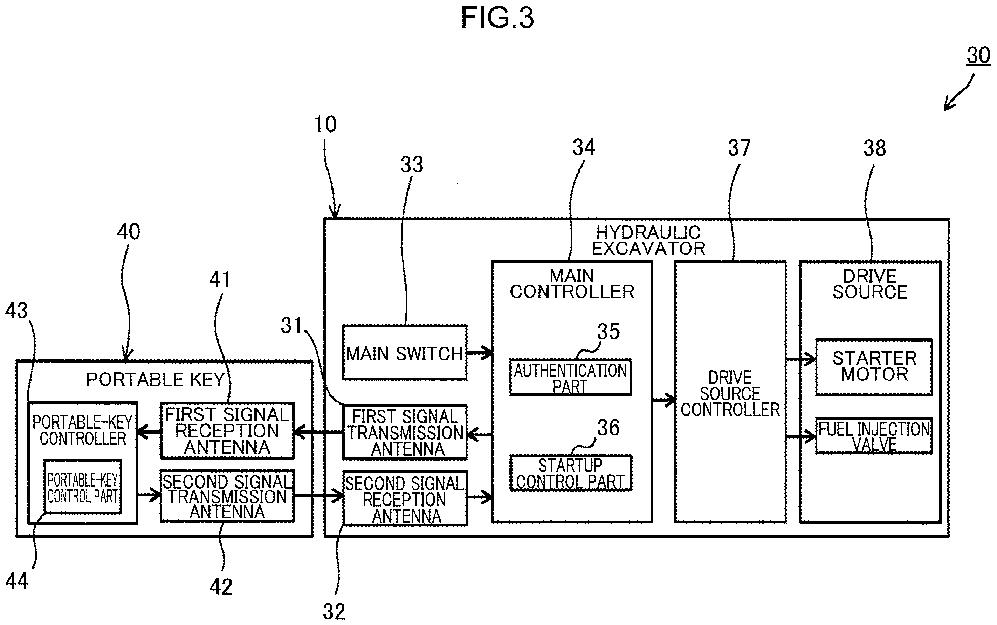

The hydraulic excavator 10 according to the present embodiment includes a drive-source startup control system 30 shown in FIG. 3, which is a control system for bringing the drive source of the hydraulic excavator 10 into a startup-operation available state. The drive-source startup control system 30 includes a plurality of system elements. The plurality of system elements include a first signal transmission antenna 31, a second signal reception antenna 32, a main switch 33, a main controller 34, a drive-source controller 37, a drive source 38, and a plurality of portable system elements included in the portable key 40, to execute electronic control. Among the plurality of system elements, the system elements other than the plurality of portable system elements are machine system elements installed in the hydraulic excavator 10, while the portable key 40 including the plurality of portable system elements can be taken out from the hydraulic excavator 10 when the hydraulic excavator 10 is not used. The plurality of mechanical system elements are supplied with driving power from a non-illustrated power source (such as a battery). The plurality of portable system elements are supplied with driving power from a non-illustrated dry battery set in the portable key 40.

The main controller 34 includes an authentication part 35 and a startup control part 36. The main controller 34 performs the transmission and reception of a first signal X1 and a second signal X2 between the controller 34 and the portable key 40 through the first signal transmission antenna 31 and the second signal reception antenna 32, respectively. The first signal X1, which is, for example, an LF (Low Frequency) signal of about 125 Khz band, is transmitted from the first signal transmission antenna 31, which is a transmitter and hereinafter may be simply referred to as a "transmission antenna".

The plurality of portable system elements in the portable key 40 include a first signal reception antenna 41, a second signal transmission antenna 42 and a portable-key controller 43. The portable-key controller 43 includes a portable-key control part 44. When the first signal reception antenna 41 receives the first signal X1 having an intensity enough to be sensible, the portable-key controller 43 makes the second signal transmission antenna 42 transmit the second signal X2. The second signal X2, which is, for example, an RF (Radio Frequency) signal of about 312 MHz band, is an authentication signal including an ID code for authentication, the ID code being set correspondingly to the portable key 40.

The authentication part 35 of the main controller 34 compares the ID code for authentication included in the second signal X2 that is received from the portable key 40 with a normal ID code stored in advance in the authentication part 35, thereby judging whether or not the portable key 40 corresponds to the hydraulic excavator 10. When the main switch 33 is operated with the judgment that the portable key 40 corresponds to the hydraulic excavator 10, the startup control part 36 inputs a startup command to the drive-source controller 37.

The drive-source controller 37 makes the drive source 38 started up in response to the startup command that is input to the drive-source controller 37. The drive source 38 according to the present embodiment is an internal combustion such as an engine, including a starter motor, an igniter and a fuel injection valve. The drive source 38 is actually started up by the rotation of the starter motor through the energization of the starter motor, the ignition by the igniter, and the injection of fuel from the fuel injection valve of a fuel injection device.

The drive-source startup control system 30 is configured to execute a plurality of processes for each predetermined cycle (e.g., 0.1 seconds). The plurality of processes include a process to be performed by the portable-key control part 44 in the portable-key controller 43, a process to be performed by the authentication part 35 of the main controller 34, and a process to be performed by the startup control part 36 of the main controller 34.

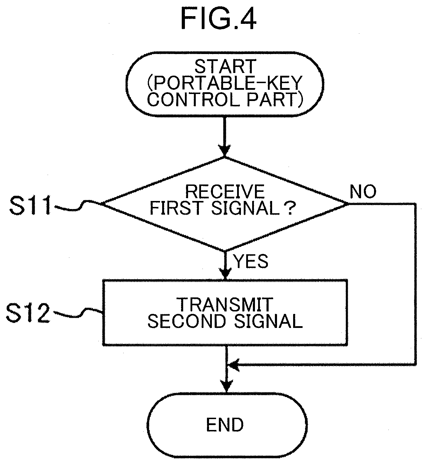

FIG. 4 is a flowchart showing the process to be performed by the portable-key control part 44. The portable-key control part 44 judges whether or not the first signal reception antenna 41 has received the first signal X1 (step S11). When judging that the first signal reception antenna 41 has received the first signal X1 (YES in step S11), the portable-key control part 44 inputs an operation command to the second signal transmission antenna 42 to make the second signal transmission antenna 42 transmit the second signal X2 (step S12). On the other hand, when judging that the first signal X1 has not been received (NO in step S11), the portable-key control part 44 inputs no operation command for making the second signal transmission antenna 42 transmit the second signal X2 to the second signal transmission antenna 42.

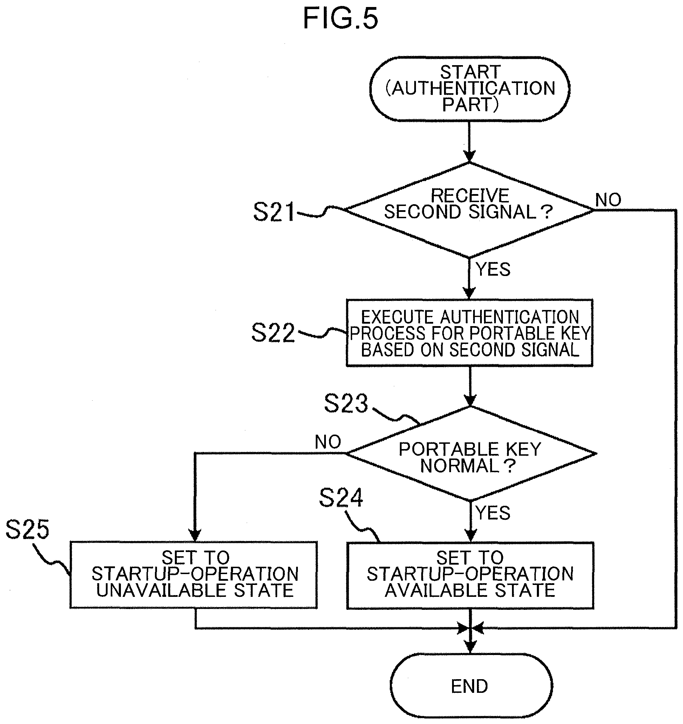

FIG. 5 shows the process to be performed by the authentication part 35. The authentication part 35 judges whether or not the second signal reception antenna 32 is receiving the second signal X2 (step S21). When judging that the second signal reception antenna 32 has not received the second signal X2 (NO in step S21), the authentication part 35 immediately ends the process.

When judging that the second signal reception antenna 32 is receiving the second signal X2, the authentication part 35 executes authentication process for the portable key 40 based on the received second signal X2 (step S22). Specifically, the authentication part 35 performs a process of comparing the ID code for authentication included in the received second signal X2 with the predetermined normal ID code.

The authentication part 35 judges whether or not the portable key 40 is normal based on the comparison (step S23). Specifically, when the ID code for authentication included in the second signal X2 is coincident with the normal ID code, the authentication part 35 judges that the portable key 40 corresponds to the hydraulic excavator 10, that is, a normal one. If the ID code for authentication included in the second signal X2 is not coincident with the normal ID code, the authentication part 35 judges that the portable key 40 does not correspond to the hydraulic excavator 10, that is, not a normal one.

When judging that the portable key 40 is normal (YES in step S23), the authentication part 35 sets the drive source 38 to a startup-operation available state (step S24). The startup-operation available state is a state where the drive source 38 can be started up by the operation on the main switch 33 in a state where the drive source 38 is stopped.

When judging that the portable key 40 is not normal (NO in step S23), the authentication part 35 sets the drive source 38 to a startup-operation unavailable state (step S25). The startup-operation unavailable state is a state where the drive source 38 is kept stopped and cannot be started up even with the operation on the main switch 33.

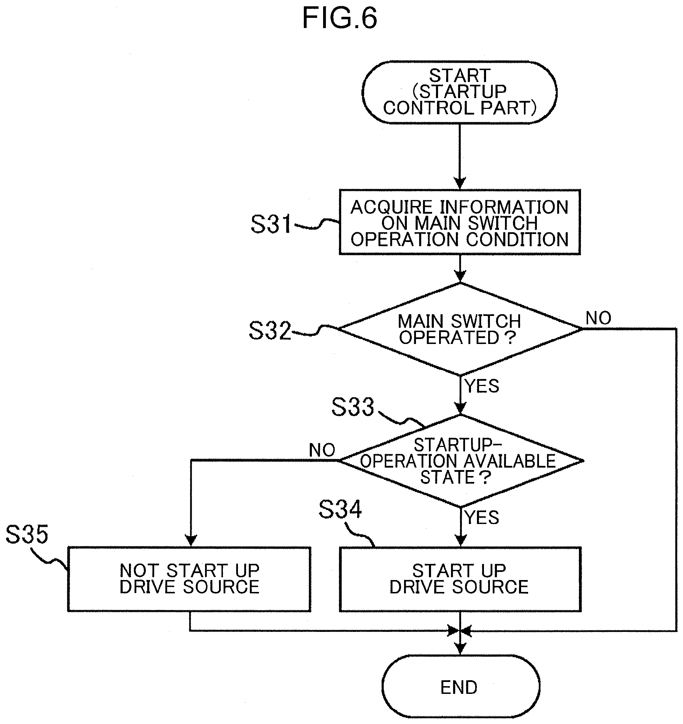

FIG. 6 shows the process to be performed by the startup control part 36. The process by the startup control part 36 is executed with the drive source 38 stopped.

The startup control part 36 acquires information on the operation condition of the main switch 33, specifically, information on whether or not the main switch 33 is depressed (step S31), and judges the operation condition of the main switch 33 based on the thus acquired information (step S32). When judging that the main switch 33 is not depressed (NO in step S32), the startup control part 36 immediately ends the process. When judging that the main switch 33 is pressed down (YES in step S32), the startup control part 36 judges whether or not the drive source 38 is set to the startup-operation available state in above-described step S24 (step S33).

When the drive source 38 is set to the start-up operation available state (YES in step S33), the main switch 33 is operated (YES in step S32), and the portable key 40 corresponds to the hydraulic excavator 10 (YES in step S23 shown in FIG. 5); therefore, the startup control part 36 inputs a startup command for starting the drive source 38 to the drive-source controller 37. The drive-source controller 37 having received the input of the startup command inputs an operation command to the starter motor and the fuel injection valve of the drive source 38 to start up the drive source 38 (step S34). The thus started drive source 38 drives a non-illustrated hydraulic pump to cause the hydraulic pump to supply hydraulic pressure to the plurality of hydraulic actuators in the hydraulic excavator 10. The plurality of hydraulic actuators include a traveling actuator for moving the pair of crawlers 12a, a turning actuator for turning the upper turning body 13, the boom cylinder 14d, the arm cylinder 14e, the bucket cylinder 14f, and an actuator for moving the blade 14g shown in FIG. 1.

When the drive source 38 is set to the startup-operation unavailable state (NO in step S33), the portable key 40 does not correspond to the hydraulic excavator 10 (NO in step S23 shown in FIG. 5); therefore, the startup control part 36 does not start the drive source 38 (step S35) despite that the main switch 33 is operated (YES in step S32).

Next will be specifically described the position where the transmission antenna (the first signal transmission antenna 31) is provided in the hydraulic excavator 10.

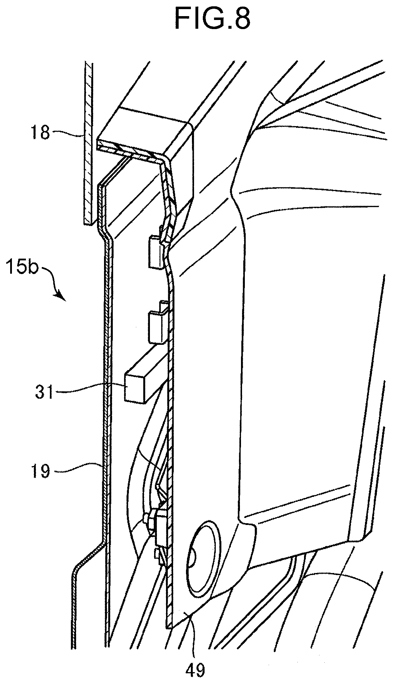

FIG. 7 is a perspective view of an operation room inside the cabin 15 according to the present embodiment as viewed from the left front, and FIG. 8 is a perspective view of a cut surface obtained by cutting the right side wall 15b of the cabin 15 shown in FIG. 7 along a surface along VIII-VIII from the left front. Some components are not illustrated in FIGS. 7 and 8.

The outer wall plate 19 forming the substantially lower half portion of the right side wall 15b is composed of a steel plate or another metal plate, hindering the electromagnetic waves in the Khz band and the Mhz band from passing through the outer wall plate 19. The outer wall plate 19, therefore, blocks each of the first signal X1 and the second signal X2. The outer wall plate 19 has an outer wall surface facing the outside of the right side wall 15b and an inner wall surface facing the inside of the cabin 15, and the inner wall surface is covered with a resin inner wall plate 49. The inner wall plate 49 is a decorative plate facing the cabin interior space, being a non-shielding member that allows electromagnetic waves to pass therethrough. The inner wall surface of the inner wall plate 49, that is, the front side surface, defines the inner end of the cabin interior space. Between the inner wall surface of the outer wall plate 19 and the back side surface, that is, the outer wall surface, of the inner wall plate 49 is defined a narrow wiring space.

In the first embodiment, in the wiring space is disposed the first signal transmission antenna 31, which is a transmitter, together with various types of wiring related to the electrical component. In the example shown in FIG. 8, the first signal transmission antenna 31 is disposed in the central region of the outer wall plate 19 apart from the upper edge, the lower edge, the front edge and the rear edge of the outer wall plate 19.

The inner wall plate 49, which is made of a resin to allow electromagnetic waves in a Khz band and an Mhz band to pass through the inner wall plate 49, enables the first signal reception antenna 41 of the portable key 40 to reliably receive the first signal X1 transmitted from the first signal transmission antenna 31 when the portable key 40 is located in the cabin interior space. In contrast, when the portable key 40 is located outside the cabin 15 and on the outer side of the outer wall plate 19 (left side in FIG. 1 and FIG. 8), the outer wall plate 19, which shields the first signal X1, prevents the first signal X1 from reaching the portable key 40 with a sufficient intensity, that is, from being received by the first signal reception antenna 41.

The outer wall plate 19, thus, forms the outer shielding part located on the outer side of the first signal transmission antenna 31 disposed in the cabin 15, and prevents the first signal X1 from passing through the outer wall plate 19 from the first signal transmission antenna 31 to leak out to an outer space of the outer wall plate 19 (the space on the left side in FIG. 1 and FIG. 7). Moreover, the right side wall 15b including the outer wall plate 19 is the cabin inner side wall located closer to the widthwise frame center line than the left side wall 15c, which is the cabin outer side wall, on the turning frame 11 i.e., the body frame, being difficult for a worker to approach; therefore, even if the worker carries the portable key 40, the first signal X1 output from the first signal transmission antenna 31 can be effectively restrained from reaching the portable key 40. Furthermore, in the present embodiment, the work device 14 adjacent to the right side wall 15b on the outer side thereof enables the right side wall 15b to be more effectively prevented from being approached by a worker from the outside (left side in FIG. 1).

On the other hand, the left side wall 15c, which is the cabin outer side wall, is easier for a worker to approach than the right side wall 15b, and allows the first signal X1 to leak out to the outside space of the left side wall 15c (the space on the right side in FIG. 1) through the entrance 15g formed in the right side wall 15b when the entrance 15g is opened; however, the leakage of the first signal X1 through the entrance 15g is also effectively reduced by the distance in the frame width direction between the first signal transmission antenna 31 and the entrance 15g, the distance corresponding to the width of the cabin inner space.

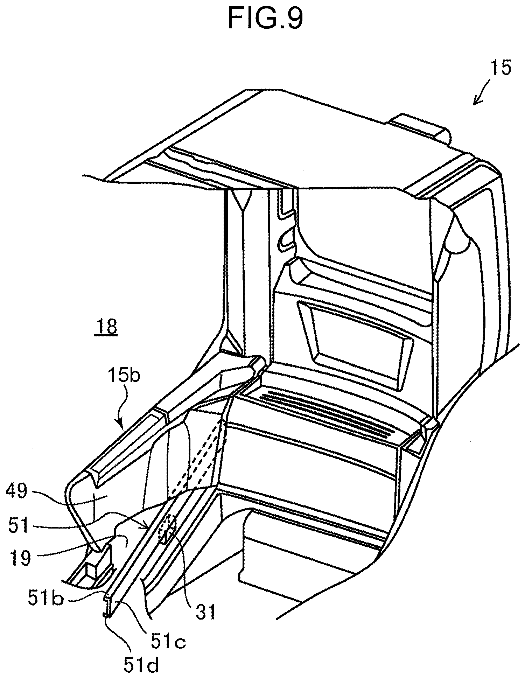

FIG. 9 shows the position of a first signal transmission antenna 31 according to the first modification of the first embodiment shown in FIG. 8. The cabin 15 according to the first modification also includes a right side wall 15b, which is a cabin inner side wall, similarly to the cabin 15 according to the first embodiment, and the right side wall 15b includes an oblique beam 51 in addition to an outer wall plate 19 facing the outside of the cabin and an inner wall plate 49 facing the cabin interior space. The oblique beam 51 is disposed in a gap formed between the outer wall plate 19 and the inner wall plate 49, extending obliquely from the front lower part to the rear upper part of the outer wall plate 19. The oblique beam 51 is composed of a steel member extending in a specific longitudinal direction, for example, a channel member, and disposed along the outer wall plate 19 so as to enhance the rigidity of the cabin 15 to thereby serve as a reinforcement member. In FIG. 9, the lower portion of the inner wall plate 49 is partially emitted to show the oblique beam 51.

The oblique beam 51 includes an upper wall portion 51b, a lower wall portion 51d, and an intermediate wall portion 51c. The upper wall portion 51b and the lower wall portion 51d extend in the longitudinal direction while vertically opposed to each other. The intermediate wall portion 51c, while extending in the longitudinal direction, is joined to respective edges of the upper wall portion 51b and the lower wall portion 51d on the same side so as to interconnect the edges. The oblique beam 51 according to the first modification example, therefore, has a shape opening toward the outer wall plate 19, that is, toward the outside of the cabin 15, having a cross section of substantially inverted C-shape viewed from the front side. Respective opened edges of the upper wall portion 51b and the lower wall portion 51d are in contact with the inner wall surface of the outer wall plate 19. The opening formed between the upper wall portion 51b and the lower wall portion 51d, thus, is closed by the outer wall plate 19.

The oblique beam 51 is made of a conductive material, being a shielding member that prevents electromagnetic waves from passing through the oblique beam 51. The first signal transmission antenna 31 is disposed on the inner side of the oblique beam 51, for example, along the lower wall portion 51d. The oblique beam 51 thus covers the first signal transmission antenna 31 on the upper side and the front side thereof, shielding the first signal X1 that is output from the first signal transmission antenna 31. In other words, the oblique beam 51 includes the part that is interposed between the first signal transmission antenna 31 and the transparent plate 18 to form an inner shielding part, which part prevents the first signal X1 from passing therethrough. The first signal X1 transmitted from the first signal transmission antenna 31, hence, cannot reach the transparent plate (the transparent plate 18 located above the oblique beam 51 in FIG. 9) without bypassing the oblique beam 51 along a complicated path. The first signal X1 output from the first signal transmission antenna 31 is thus restrained from leaking out to the outside of the cabin 15 through the transparent plate 18, which is a non-shielding part. The oblique beam 51 as the reinforcement member, thus, also serves as an inner shielding part that prevents the first signal X1 from passing through the oblique beam 51 to reach the transparent plate 18, which is the non-shielding part, from the first signal transmission antenna 31. According to the first modification shown in FIG. 9, therefore, even if the portable key 40 is present immediately outside the transparent plate 18, which is the non-shielding part, the drive source 38 is prevented from being brought into the startup operation available state or being actually started, whereby the safety performance of the hydraulic excavator 10 is further improved.

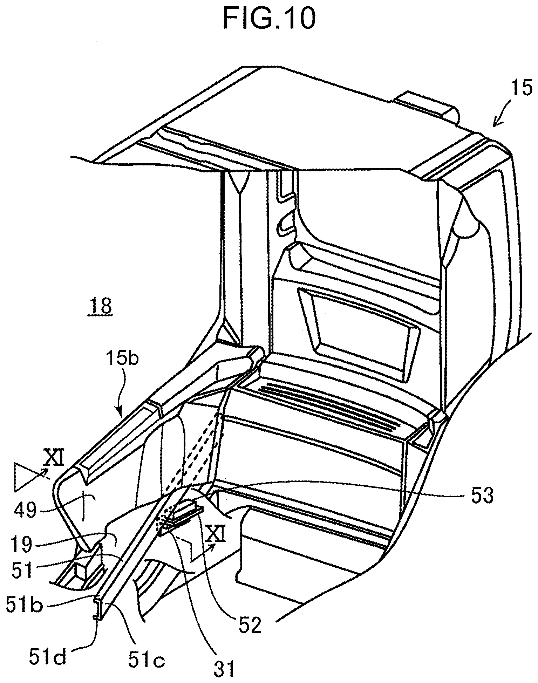

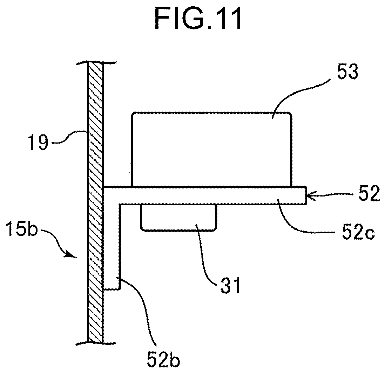

FIG. 10 is a perspective view showing a second modification example of the first embodiment, and FIG. 11 shows a cross section obtained by cutting a right side wall 15b, which is a cabin inner side wall, on a vertical surface along the XI-XI line shown in FIG. 10. The second modification example is the further modification of the first modification shown in FIG. 9.

The right side wall 15b according to the second modification includes an inner shielding part, which includes an attachment member 52 in addition to the oblique beam 51. The attachment member 52 is a member for attaching an electrical component to the outer wall plate 19, fixed at a position below the oblique beam 51. The attachment member includes a vertical plate 52b and a horizontal plate 52c. The vertical plate 52b extends along the vertical surface and is fixed to the inner wall surface of the outer wall plate 19 in contact with the inner wall surface. The horizontal plate 52c protrudes inward (rightward in FIG. 11) of the cabin 15 from the upper end of the vertical plate 52b, allowing the electrical component to be attached onto the horizontal plate 52c.

The electrical component according to the second modification example is a relay box 53. The relay box 53, which belongs to an electrical system of the hydraulic excavator 10, controls the current to be supplied to a plurality of electrical components in the operation room defined by the cabin 15. The relay box 53, therefore, is interposed between the plurality of electrical components and a power supply. The relay box 53 is disposed between a non-illustrated operation seat disposed at the center of the cabin 15 and the outer wall plate 19 shown in FIG. 10. The electrical component attached with use of the attachment member 52 may be either a fuse box or a fuse and a relay box.

The attachment member 52 is composed of a metal plate such as a steel plate, having a function of shielding the first signal X1. On the other hand, the first signal transmission antenna 31, which is the transmitter according to the second modification example, is fixed to the lower surface of the horizontal plate 52c of the attachment member 52. The vertical plate 52b of the attachment member 52, thus, constitutes an outer shielding part in association with the outer wall plate 19, and the horizontal plate 52c of the attachment member 52 serves as an upper shield wall (internal shielding part) that covers the first signal transmission antenna on the upper side of the first signal transmission antenna 31. The horizontal plate 52c, thus, prevents the first signal X1 transmitted from the first signal transmission antenna 31 from passing through the horizontal plate 52c to reach a transparent plate 18, which is a non-shielding part, on the upper side of the horizontal plate 52c, thereby preventing the first signal X1 from leaking to the outside of the cabin 15 through the transparent plate 18. According to the second modification shown in FIG. 10, therefore, the drive source 38 is more reliably prevented from being brought into a startup-operation available state or being actually started in spite that the portable key 40 is outside the cabin 15, whereby the safety performance of the hydraulic excavator 10 is further improved.

As a non-illustrated modification example different from the second modification example, may be fixed to the inner wall surface of the outer wall plate 19 an ECU (engine control part) storage box that houses a drive-source controller 37 shown in FIG. 3 to accommodate the first signal transmission antenna 31 in the ECU storage box. In this modification, the top wall and the front wall of the ECU storage box can serve as an upper shield wall and a front shield wall that shield the first signal X1 on the upper side and the front side of the first signal transmission antenna 31, respectively.

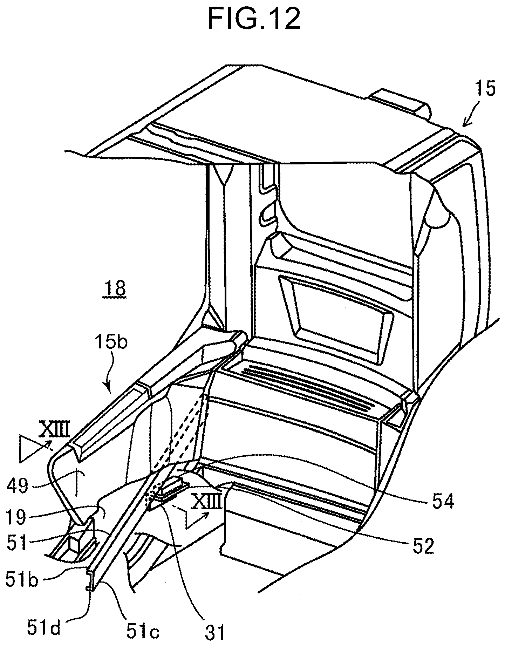

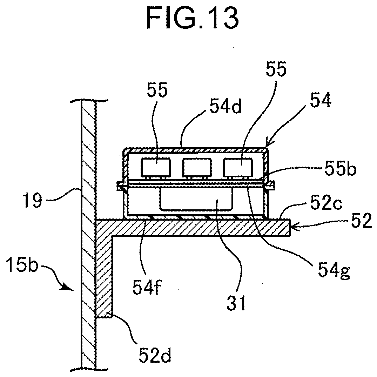

FIG. 12 is a perspective view showing a third modification of the first embodiment, and FIG. 13 is a diagram showing a cross section obtained by cutting a right side wall 15b, which is a cabin inner side wall, on a vertical surface along the XIII-XIII line shown in FIG. 12.

In the third modification example, the electrical component box 54 is fixed onto the horizontal plate 52c of the attachment member 52 in place of the relay box 53 according to the second modification example. As shown in FIG. 13, the electrical component box 54 includes an upper cover 54d, a lower cover 54f and a partition plate 54g. The upper cover 54d and the lower cover 54f are disposed above and below and engaged with each other to define an accommodation space. The partition plate 54g is disposed so as to horizontally cross the accommodation space to partition the accommodation space into an upper space and a lower space. The upper space is defined by the upper cover 54d and the partition plate 54g, and the lower space is defined by the lower cover 54f and the partition plate 54g. The lower cover 54f has a bottom surface facing downward, and the bottom surface is fixed to the upper surface of the horizontal plate 52c of the attachment member 52.

On the upper surface of the partition plate 54g is placed an electronic substrate 55b. On the upper surface of the electronic substrate 55b are disposed a plurality of circuit elements 55, each of which is, for example, a fuse element or a relay element. The plurality of circuit elements 55 are electrically connected to each other through the electronic substrate 55b. The plurality of circuit elements 55 are accommodated in the upper space defined by the upper cover 54d and the partition plate 54g. The upper cover 54d, thus, is an accommodation part for the plurality of circuit elements 55. The electrical component box 54 is a housing having a larger size than that of the relay box 53.

In the third modification example, to the lower surface of the partition plate 54g is fixed a first signal transmission antenna 31, which is a transmitter. The first signal transmission antenna 31, therefore, is covered with the lower cover 54f directly below the partition plate 54g.

While the upper cover 54d and the lower cover 54f are made of resin, the partition plate 54g includes a metal plate, which is, for example, coated with an insulation film. The partition plate 54g, therefore, has an electromagnetic wave shielding property, serving as an upper shielding wall that covers the first signal transmission antenna 31 on the upper side of the first signal transmission antenna 31. The partition plate 54g, specifically, prevents the first signal X1 transmitted from the first signal transmission antenna 31 from passing through the partition plate 54g to reach a transparent plate 18, which is a non-shielding part above the partition plate 54g, thereby preventing the first signal X1 from leaking to the outside of the cabin 15 through the transparent plate 18. According to also the third modification shown in FIGS. 12 and 13, therefore, the drive source 38 is prevented from being brought into the startup-operation available state or being actually started in spite that the portable key 40 is outside the cabin 15, whereby safety performance is improved. Besides, according to the third modification shown in FIGS. 12 and 13, the plurality of circuit elements 55 and the first signal transmission antenna 31 can be collectively accommodated, as a plurality of electrical components, in the common electrical component box 54.

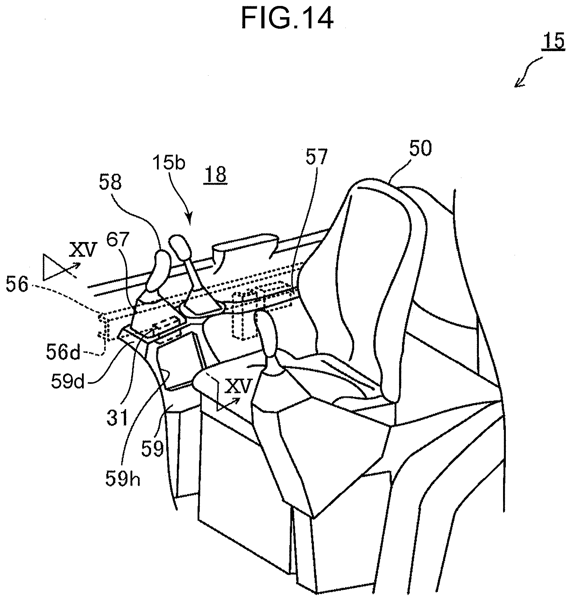

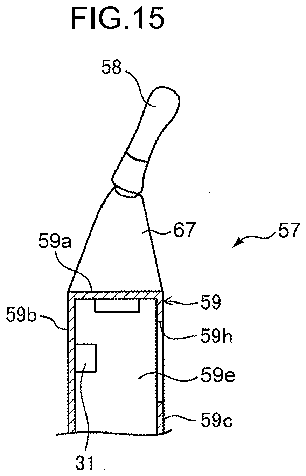

Next will be described a second embodiment of the present invention. FIG. 14 is a perspective view showing the interior of the cabin 15 according to the second embodiment, and FIG. 15 shows a cross section obtained by cutting a right side wall 15b, which is a cabin inner side wall, on a vertical surface along the XV-XV line shown in FIG. 14.

The right side wall 15b of the cabin 15 according to the second embodiment further includes a beam 56 and a console 57 shown in FIG. 14. The beam 56 and the console 57 are located on the right side of the operation seat 50, that is, the same side as the right side wall 15b, and disposed along the inner wall surface of the right side wall 15b.

The beam 56 is a reinforcement member included in the right side wall 15b, which is the cabin inner side wall, disposed so as to enhance the rigidity of the right side wall 15b. The beam 56 is composed of a metal member, such as a steel member extending in a specific longitudinal direction, i.e., the front-rear direction in the posture shown in FIG. 14, having a cross-section of a shape opening toward the outer wall plate forming the outer shielding part of the right side wall 15b (the outer wall plate 19 in the first modification example), such as an approximately inverted C-shaped cross section, similarly to the oblique beam 51 according to the first modification. The beam 56 is fixed to the inner wall surface of the outer wall plate with contact of the end surface on the opening side with the inner wall surface. The outer wall plate, therefore, covers the opening of the beam 56.

The console 57 includes an operation lever 58 and a lever support box 59 shown in FIG. 15. The lever support box 59 has a box shape and is disposed along the inner wall surface of the outer wall plate of the right side wall 15b. The operation lever 58 is connected to an upper end of the lever support box 59 to be supported by the lever support box 59. The operation lever 58 has a root, which is covered with a cover 67 fixed to the upper end of the lever support box 59. The lever support box 59 includes a plurality of box walls, which include a top wall 59a, an outer side wall 59b, an inner side wall 59c, a front wall 59d, and a back wall 59e. The outer side wall 59b is a side wall facing the outside, that is, a side wall close to the right side wall 15b, and the inner side wall 59c is a side wall facing the cabin interior space of the cabin 15, that is, a side wall opposite to the right side wall 15b across the outer side wall 59b.

In the second embodiment, inside the lever support box 59 is provided a first signal transmission antenna 31, which is a transmitter. Specifically, the first signal transmission antenna 31 is located below the root of the operation lever 58 and fixed to an inner wall surface of the side wall close to the outer wall plate of the right side wall 15b among the plurality of box walls of the lever support box 59, namely, the outer side wall 59b in the second embodiment.

Each of the box walls of the lever support box 59 is composed of a member that prevents an electromagnetic wave from passing therethrough, for example, a metal plate. The plurality of box walls, namely, the top wall 59a, the outer side wall 59b, the inner side wall 59c, the front wall 59d and the back wall 59e, therefore, form respective shielding walls disposed on the upper side, the outer side, the inner side, the front side, and the rear side of the first signal transmission antenna 31, preventing the first signal X1 transmitted from the first signal transmission antenna 31 from leaking to the outside of the lever support box 59.

The side wall on the side far from the outer wall plate of the right side wall 15b among the plurality of box walls, namely, the inner side wall 59c, is provided with an opening 59h for maintenance. The opening 59h passes through the inner side wall 59c in the left-right direction of the cabin 15, that is, the frame width direction, formed at a position to allow the first signal transmission antenna 31 to be visually recognized in the frame width direction through the opening 59h from a position on the inner side (right side in FIG. 15) of the inner side wall 59c as shown in FIG. 15. The opening 59h is, preferably, for convenience of maintenance, larger than the first signal transmission antenna 31. In the normal state with no maintenance performance, the opening 59h is closed with a non-illustrated resin lid plate.

According to the above-described second embodiment, the first signal X1 transmitted from the first signal transmission antenna 31 reaches the operation seat 50 in the cabin 15 through the opening 59h but cannot pass through the plurality of box walls, each of which is a shielding member, thus being prevented from leaking to the outside of the cabin 15 through the transparent plate 18, which is a non-shielding part located above the lever support box 59 in the right side wall 15b. The drive source 38 is thereby prevented from being brought into a startup-operation available state or being actually started in spite that the portable key 40 is outside the cabin 15.

The operation device to be supported by the support member used also as the inner shielding part like the lever support box 59 is not necessarily limited to the operation lever 58. The operation device may be, for example, an operation switch, a button, or a touch panel. The operation device and the support member may be either integrated with each other or configured to be separate members from each other. The support member does not necessarily have to have a box shape such as the lever support box 59.

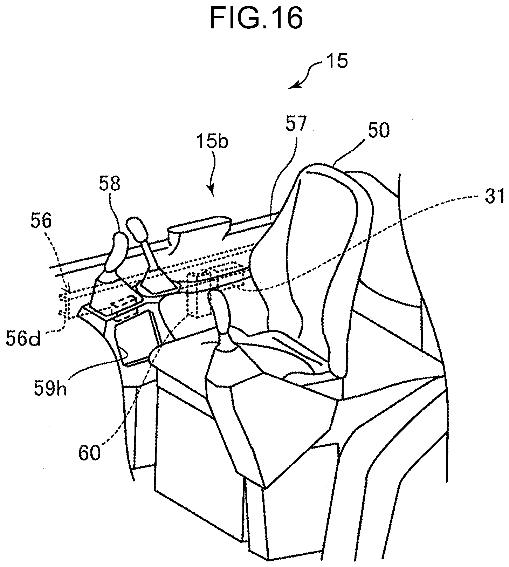

Next will be described a third embodiment of the present invention. FIG. 16 is a perspective view showing the interior of the cabin 15 according to the third embodiment, showing mainly a right side wall 15b, which is the cabin inner side wall of the cabin 15, and an operation seat 50.

The right side wall 15b of the cabin 15 according to the third embodiment includes a beam 56 similar to the beam 56 according to the second embodiment, and the beam 56 has a lower wall portion 56d, to which the upper end of a shielding member 60 forming an inner shielding part is connected. The shielding member 60 is a steel member or other metal member having a cross-section opening toward an outer wall plate, which is an outer shielding part of the right side wall 15b (for example, a substantially inverted C-shaped cross section), disposed so as to extend downward from the beam 56. The opening of the shielding member 60 is covered with the outer wall plate.

The beam 56 forms an upper shielding wall located above the first signal transmission antenna 31, which is a transmitter, and the shielding member 60 forms a front shielding wall located on the front side of the first signal transmission antenna 31. Specifically, the first signal transmission antenna 31 is disposed at a position directly below the beam 56 and rearward of the shielding member 60. The first signal transmission antenna 31 may be either attached to the lower wall portion 56d of the beam 56 or separated from the lower wall portion 56d. Similarly, the first signal transmission antenna 31 may be either attached to the shielding member 60 or separated from the shielding member 60.

According to the above-described third embodiment, the first signal X1 transmitted from the first signal transmission antenna 31 cannot pass through any of the beam 56 located on the upper side, the shielding member 60 located on the front side of the beam 56, and the outer wall plate located outside the shielding member 60, thus being prevented from leaking to the outside of the cabin 15 through the transparent plate 18, which is a non-shielding part located on the upper side of the beam 56. The beam 56, specifically, includes a part interposed between the first signal transmission antenna 31 and the transparent plate 18 to form the inner shielding part, the part preventing the first signal X1 from reaching the transparent plate 18 from the first signal transmission antenna 31. The drive source 38 is prevented from being brought into a startup-operation available state or being actually started in spite that the portable key 40 is outside the cabin 15. In particular, the arrangement of the first signal transmission antenna 31 at a corner formed by the lower wall portion 56d of the beam 56 and the upper end of the shielding member 60 allows the first signal X1 transmitted from the first signal transmission antenna 31 to be more effectively restrained from being diffused upward and frontward.

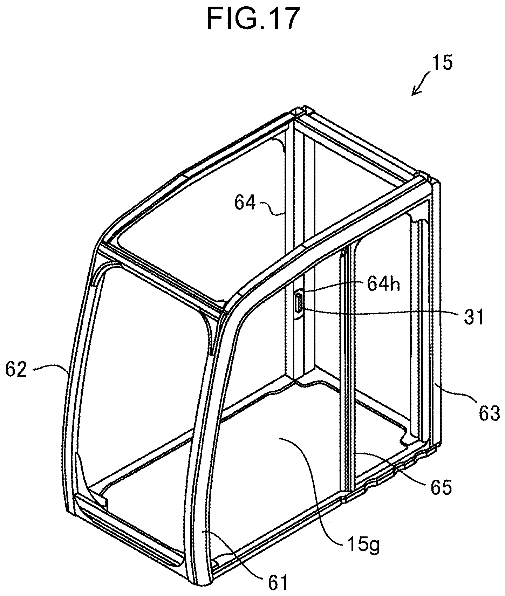

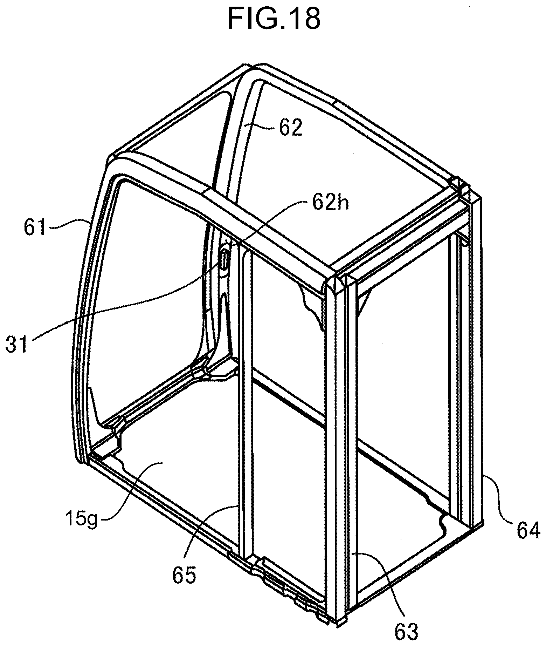

Next will be described fourth and fifth embodiments of the present invention. FIG. 17 is a perspective view showing a frame of a cabin 15 according to the fourth embodiment, and FIG. 18 is a perspective view showing a frame of a cabin 15 according to the fifth embodiment. Both of FIGS. 17 and 18 show a plurality of pillars and a plurality of beams, which constitute the cabin 15, and the plurality of pillars include a left front pillar 61, a right front pillar 62, a left rear pillar 63, a right rear pillar 64 and an intermediate pillar 65. Each of the pillars is composed of a steel member such as a square pipe, a channel member, or an angle member, and disposed in the front, rear, left and right of the cabin 15 to support the roof of the cabin 15. The left front pillar 61 and the left rear pillar 63 form the front and rear edges of a cabin outer side wall (the left side wall 15c according to the first embodiment) of the cabin 15, respectively, and the right front pillar 62 and the right rear pillar 64 form the front and rear edges of the cabin inner side wall (the right side wall 15b according to the first embodiment) of the cabin 15, respectively. The intermediate pillar 65 is located between the left front pillar 61 and the left rear pillar 63 in the cabin outer side wall of the cabin 15, defining a rear edge of the entrance 15g. Each of the beams is joined to the upper end or the lower end of the corresponding pillar among the plurality of pillars. Between the left front pillar 61 and the intermediate pillar 65 is disposed a non-illustrated opening/closing door for opening and closing the entrance 15g.

In the fourth embodiment shown in FIG. 17, at least the right rear pillar 64 of the plurality of pillars is composed of a pipe member, such as a square pipe, and the right rear pillar 64 is formed with a communication hole 64h in an appropriate part other than the upper end part and the lower end part thereof. The communication hole 64h is formed so as to bring the interior space of the pipe member constituting the right rear pillar 64 into communication with not the exterior but the interior of the cabin 15. The communication hole 64h is preferably a long hole extending vertically.

In the fourth embodiment, in the interior space of the right rear pillar 64 is disposed a first signal transmission antenna 31, which is a transmitter. The first signal transmission antenna 31 is disposed at such a height position that the first signal X1 transmitted from the first signal transmission antenna 31 can reach the cabin interior space of the cabin 15 through the communication hole 64h, preferably a height position equivalent to the height position of the communication hole 64h.

In the fifth embodiment shown in FIG. 18, at least the right front pillar 62 of the plurality of pillars is composed of a pipe member, such as a square pipe, and formed with a communication hole 62h in an appropriate part other than the upper end and the lower end. The communication hole 62h is also formed so as to bring the interior space of the pipe member forming the right front pillar 62 into communication with not the exterior but the interior of the cabin 15. The communication hole 62h is also preferably a long hole extending vertically. In the fifth embodiment, in the interior space of the right front pillar 62a is disposed a first signal transmission antenna 31, which is a transmitter. The first signal transmission antenna 31 is disposed at such a height position that the first signal X1 transmitted from the first signal transmission antenna 31 can reach the cabin interior space of the cabin 15 through the communication hole 62h, preferably, a height position equal to the height position of the communication hole 62h.

According to the fourth and fifth embodiments shown in FIGS. 17 and 18, respectively, each of the right rear pillar 64 and the right front pillar 62, which are the pillar members of the cabin 15, is a shielding member that does not transmit electromagnetic waves, forming an outer shielding part interposed between the first signal transmission antenna 31 and the space outside the cabin inner side wall. Each of the right rear pillar 64 and the right front pillar 62, therefore, restrains the first signal X1 transmitted from the first signal transmission antenna 31 from leaking to the outside of the cabin 15. The drive source 38 is thereby prevented from being brought into a startup-operation available state or actually started in spite that the portable key 40 is outside the cabin 15. Meanwhile, the first signal X1 is allowed to reach the cabin interior space of the cabin 15 through the communication holes 64h, 62h.

In each of the first to fifth embodiments and the modifications of the first to fifth embodiments described above, the intensity of the first signal X1 transmitted from the first signal transmission antenna 31, which is a transmitter, can be arbitrarily set. The intensity of the first signal X1, however, is more preferably set to an intensity that enables the first signal X1 to reach the operation seat 50 in the cabin 15 but prevents the first signal X1 from reaching the outside of the cabin 15 through the entrance 15g. This makes it possible to prevent the first signal X1 from leaking out of the cabin 15 through the entrance 15g by effective utilization of the width dimension of the cabin interior space while allowing the first signal X1 output from the first signal transmission antenna 31 to reach the portable key 40 carried by an operator sitting on the operation seat 50.

While the embodiment of the present invention has been described with reference to the drawings, the present invention is not limited to the embodiment shown in the drawings. In place of the hydraulic excavator described above, the present invention can be applied to a crane or other construction machinery.

For example, while the right side wall 15b serves as a cabin inner side wall and the left side wall 15c serves as a cabin outer side wall in the cabin 15 in each of the first to fifth embodiments, it may be conversely modified such that the left side wall 15c serves as the cabin inner side wall and the right side wall 15b serves as the cabin outer side wall. **In** summary, the cabin 15 may be disposed at a position deviated to not the left side but the right side with respect to the widthwise frame center line.

The non-shielding part included in the cabin inner side wall and the inner shielding part provided in relation to the part to be shielded are not essential. For example, the cabin inner side wall may include no non-shielding part.

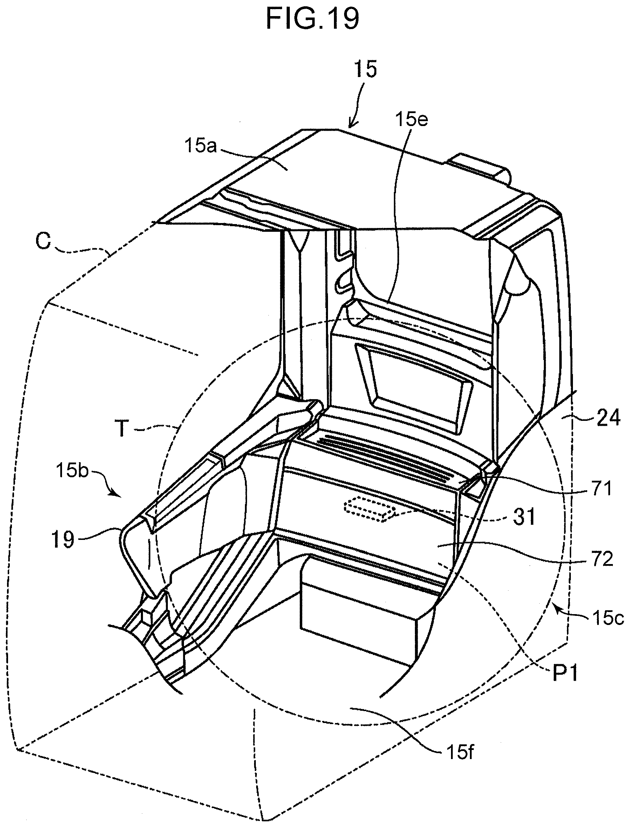

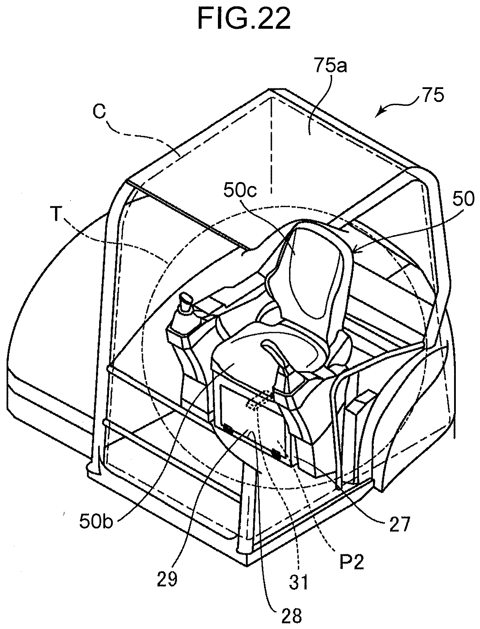

Furthermore, the prevention of the first signal X1 from leaking to the outside of the cabin 15 can be achieved also by the techniques shown, for example, in FIGS. 19 to 21 or the techniques shown in FIGS. 22 to 24.

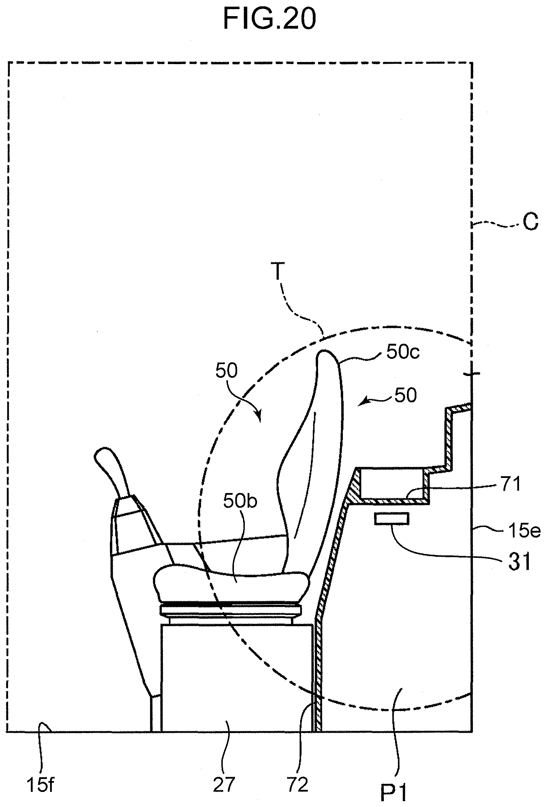

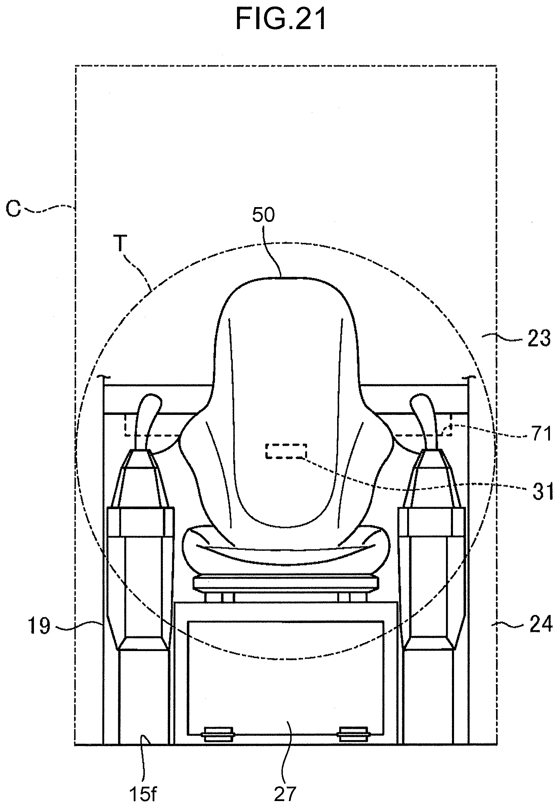

FIG. 19 is a perspective view showing the interior of the cabin 15, representing a state where an operation seat area C in the cabin 15 is viewed from the left front side of the cabin 15. **In** FIG. 19 are omitted a front wall, an operation seat, an operation lever and the like of the cabin 15. FIGS. 20 and 21 are a cross-sectional side view and a front view showing the operation seat area C, respectively.

**In** addition to the operation seat 50 disposed on the floor wall 15f of the cabin 15, provided in the cabin 15 are a rear tray 71 and a box body 72 which are located behind the operation seat 50. The rear tray 71 is disposed forward of the back wall 15e of the cabin 15. The rear tray 71 includes a plurality of side walls provided in front, rear, left and right, respectively, and a bottom wall joined to respective lower edges of the plurality of side walls, defining a rectangular recess space opened upward. The rear tray 71 is capable of storing non-illustrated small articles, allowing small articles to be put in and take out of the rear tray 71 by an operator from above.

The box body 72 is made of a resin and disposed directly below the rear tray 71 to define a seat rear space P1. The operation seat 50 includes a seat surface part 50b that allows an operator to sit thereon, a backrest part 50c located behind the operator sitting on the seat surface part 50b, and an under-seat storage part 27 located under the seat surface part 50b, wherein the rear tray 71 and the box body 72 are disposed adjacent to the backrest part 50c in the front-rear direction.

In the technique, in the seat rear space P1 are disposed various wiring related to an electrical component and a first signal transmission antenna 31, which is a transmitter. The first signal transmission antenna 31 transmits a first signal X1, the output intensity of which is set so as to allow the first signal X1 to pass through the resin box body 72 to reach the operation seat 50 and the periphery of the operation seat 50 but so as to prevent the first signal X1 from reaching the outside of the left side wall 15c, which is the cabin outer side wall of the cabin 15. Specifically, according to the technique, as shown in FIG. 19, the reach of the first signal X1 output from the first signal transmission antenna 31 is limited within an effective range T, which is a spherical space with the first signal transmission antenna 31 as a center. The effective range T, thus, corresponds to the transmittable range of the first signal X1. The diameter of the effective range T is equal to or smaller than the interval between the outer wall plate 19 of the right side wall 15b, which is the cabin inner side wall of the cabin 15, and the outer wall plate 24 of the left side wall 15c, which is the cabin outer side wall. The upper end of the effective range T is lower than the top wall 15a of the cabin 15. The operation seat 50 is confined within the effective range T, preferably located in the vicinity of the center of the effective range T.

The effective range T encompasses the operation seat 50 and at least one driving seat peripheral member adjacent to the operation seat 25. In the example shown in FIGS. 20 to 22, the at least one operation seat peripheral member includes the rear tray 71 and the box body 72. The back wall 15e is composed of a steel plate or other metal plate, blocking the first signal X1 to prevent the first signal X1 from leaking rearward of the back wall 15e. As long as the portable key similar to the portable key 40 shown in FIG. 3 is located within the effective range T, the first and second signals X1 and X2 can be transmitted and received by the first signal transmission antenna 31 and the portable key 40.

According to the technique disclosed in FIGS. 19 to 21, as long as the operator who carries the normal portable key sits on the operation seat 50, the transmission and reception of the first signal X1 and the second signal X2 are allowed between a controller installed on the hydraulic excavator provided with the cabin 15 (for example, the main controller 34 shown in FIG. 3) and the portable key. Any person who carries the normal portable key, therefore, can operate the hydraulic excavator without hindrance.

In contrast, when the portable key is outside the operation seat area C, for example, outside the cabin 15, the first signal X1 cannot reach the portable key, making the transmission and the reception of the first signal X1 and the second signal X2 between the controller (for example, the main controller 34) and the portable key impossible and keeping the drive source 38 from the start-up operation available state. The drive source 38 is thus prevented from being brought into the startup-operation available state or being actually started when the portable key is located outside the operation seat area C. This effect can be provided even with the first signal transmission antenna 31 disposed on the rear tray 71. Besides, the operation seat area C is not limited to one defined by a plate member such as the box body 72.

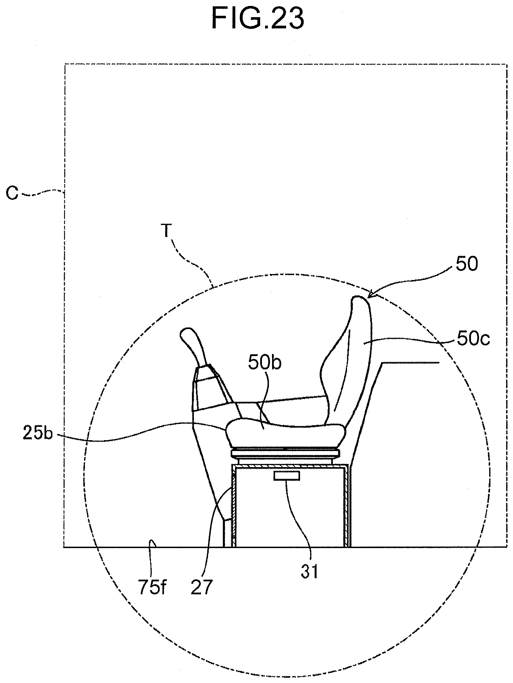

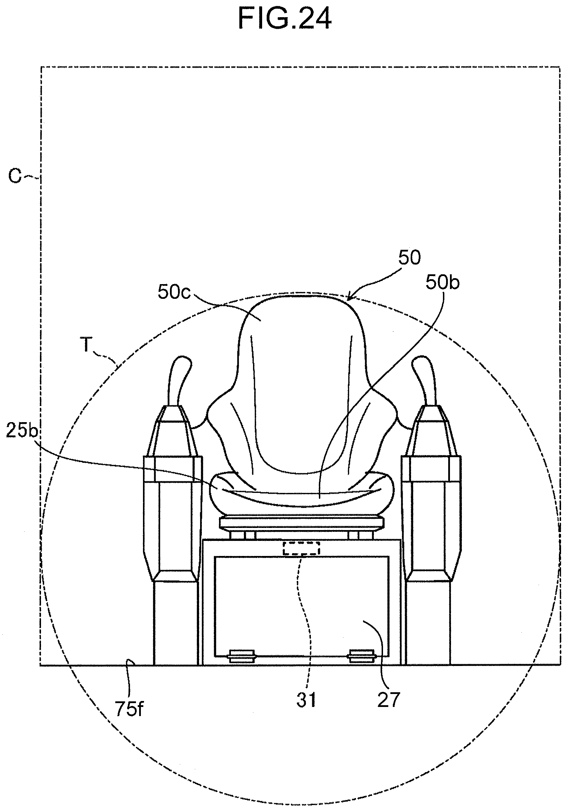

FIG. 22 is a perspective view showing another technique, representing mainly elements in the operation seat area C. FIGS. 23 and 24 are a cross-sectional side view and a front view of the operation seat area C, respectively.

The disclosed technique involves a canopy 75 of a type different from the cabin 15 shown in FIGS. 19 to 21, and the technique is related to a portable key is applied to the canopy 75. The operation seat area C lies inside the canopy 75, and an operation seat 50 is installed in the operation seat area C. The canopy 75 lacks at least one of the top wall 15a, the front wall 15b, the windshield 17, the entrance door 16 and the outer wall plate 24 of the left side wall 15c, the transparent 18 and the outer wall plate 19 of the right side wall 15b and the back wall 15e, which are included in the above-described cabin 15 shown in FIG. 2, and the operation seat area C is opened to the outside of the canopy 75. The operation seat area C is substantially equal to a space within which there is a possibility of presence of an operator who performs operations in the canopy 75, set above a floor wall 75f of the canopy 75, and the operation seat area C has a lower boundary surface at the same height as the upper surface of the floor wall 75f. The canopy 75 shown in FIGS. 22 to 24 includes a top wall 75a and a plurality of pillars supporting the top wall 75a, and the operation seat area C has an upper boundary surface at the substantially same height as the lower surface of the top wall 75a. In a canopy of a type not including the top wall 75a, depending on the height of an operator, the upper boundary surface of the operation seat area C is preferably set at a position separated upward from the floor wall 75f by 1.5 to 2.0m.

In the technique shown in FIGS. 22 to 24, in the operation seat 50 is provided a first signal transmission antenna 31, which is a transmitter. Specifically, the first signal transmission antenna 31 is provided in the under-seat storage part 27 of the operation seat 50. Similarly to the operation seat 50 shown in FIG. 20 and FIG. 21, the under-seat storage part 27 is located under the seat surface part 50b of the operation seat 50. The under-seat storage part 27 is a box-shaped body defining a storage space P2 for storing small articles, the storage space P2 opened forward through the opening 28 on the front side thereof. The opening 28 allows the small articles to be taken in and out of the storage space P2 through the opening 28. The operation seat 50 further includes a lid plate 29 capable of opening and closing the opening 28. The first signal transmission antenna 31 is disposed directly below the seat surface part 50b in the under-seat storage part 27.

The effective range T of the first signal X1 output from the first signal transmission antenna 31 has a spherical shape with the first signal transmission antenna 31 as a center. The effective range T has a radius corresponding to the output intensity of the first signal transmission antenna 31. The effective range T is set so as to encompass the entire seat surface part 50b, the entire under-seat storage part 27, and a part of the floor wall 75f. The size of the effective range T is restricted so as not to exceed the left boundary surface and the right boundary surface of the operation seat area C. The effective range T may encompass either the entire backrest part 50c of the operation seat 50 or only a part of the backrest part 50c.

According to the technique shown in FIGS. 22 to 24, the transmission and reception of the first signal X1 and the second signal X2 are allowed to be performed between a controller (for example, the main controller 34 shown in FIG. 3) installed on the hydraulic excavator and the portable key as long as the operator who carries the normal portable key sits on the operation seat 50, similarly to the technique shown in FIGS. 19 to 21. Any person who sits on the operation seat 50 and carries the regular portable key 40, therefore, can operate the hydraulic excavator without hindrance. In contrast, when a person carrying the regular portable key is outside the canopy 75, the portable key is prevented from receiving the first signal X1. The position of the first signal transmission antenna 31 in the operation seat 50 for achieving the above effects is not limited to the inside of the under-seat storage unit 27. The effect can be provided, for example, even with the first signal transmission antenna 31 located inside the seat surface part 50b or the backrest part 50c.

As has been described, there is provided a construction machine including a cabin and a portable key, the construction machine being capable of restraining the construction machine from unexpected movement with the portable key outside the cabin. The construction machine includes a body frame, a cabin, a transmitter, a portable key, and a controller. The cabin is mounted on the body frame and allows an operator to get in the cabin. The transmitter is disposed inside the cabin and transmits a first signal. The portable key is configured to be carriable by the operator and capable of receiving the first signal and transmitting a second signal, which is an authentication signal, in response to a reception of the first signal. The controller judges whether or not the portable key corresponds to the construction machine based on the second signal, and brings the drive source of the construction machine into a startup-operation available state when judging that the portable key corresponds to the construction machine. The startup-operation available state is a state where an operation for starting up the drive source is available. The cabin is disposed at a position biassed in a frame width direction with respect to a widthwise frame center line. The widthwise frame center line is a center line of the body frame in the frame width direction, which is a width direction of the body frame. The cabin includes a pair of cabin inner side wall and cabin outer side wall, which are opposed to each other in the frame width direction across a cabin interior space for receiving the operator. The cabin inner side wall is located closer to the widthwise frame center line than the cabin outer side wall. The cabin outer side wall is formed with an entrance to allow the operator to get in and get out of the cabin interior space through the entrance. The transmitter is attached to the cabin inner side wall.

The transmitter, which is attached to the cabin inner side wall closer to the frame center line in the width direction than the cabin outer side wall, is hard for a worker outside the cabin to approach, for example, compared with a transmitter provided to the cabin outer side wall or in the center of the cabin. This effectively restrains the first signal that is output from the transmitter from being received by the portable key in spite that a worker carrying the portable key is outside the cabin. Besides, since the transmitter attached to the cabin inner side wall is separated from the entrance of the cabin outer side wall at least in the frame width direction across the cabin interior space, the first signal can be prevented from leaking to the outside of the cabin through the entrance even when the entrance is opened.

The cabin inner side wall preferably includes an outer shielding part interposed between an outer space of the cabin inner side wall and the transmitter. The outer shielding part hinders the first signal from passing through the outer shielding part from the transmitter to leak out to the outer space, thereby more reliably preventing the portable key located outside the outer shielding part from receiving the first signal.

The cabin inner side wall may further include a non-shielding part such as a transparent plate. The non-shielding part is located at a position deviated from the outer shielding part in a direction along a vertical surface and allows the first signal to pass through the non-shielding part. Even in this case, when the cabin further includes an inner shielding part, which is interposed between the non-shielding part and the transmitter in the cabin to hinder the first signal from reaching the non-shielding part from the transmitter through the inner shielding part, the first signal can be restrained from leaking to the outside of the cabin through the non-shielding part.

For example, at least a part of the inner shielding part may be included in a support member that supports a device for operating the construction machine. This makes it possible to restrain the first signal from leaking out with utilization of the support member as the inner shielding part to reduce the number of components.

The inner shielding part may include, for example, at least one of an upper shielding wall covering the transmitter on the upper side of the transmitter, a front shielding wall covering the transmitter on the front side of the transmitter, and a rear shielding wall covering the transmitter on the rear side of the transmitter.

At least a part of the inner shielding part may be included in a reinforcement member disposed along an inner wall surface of the outer shielding part so as to enhance the rigidity of the cabin inner side wall. Thus utilizing the reinforcement member as the inner shielding part allows the number of components to be inhibited from being increased.

Alternatively, at least a part of the outer shielding part and the inner shielding part may be included in a cabin pillar member standing up on the body frame so as to extend vertically.

In a case where the construction machine further includes a work device capable of performing a working motion, it is preferable that the work device is disposed on the body frame at a position adjacent to the cabin inner side wall in the frame width direction on the outer side of the cabin inner side wall. The work device inhibits a worker carrying the portable key from approaching the cabin inner side wall from the outer side of the cabin inner side wall, thereby preventing the first signal transmitted from the transmitter attached to the cabin inner side wall from being received by the portable key located outside the cabin inner side wall.

## Claims

1. A construction machine (10) comprising:
a body frame (11);
a cabin (15) that is mounted on the body frame (11) and allows an operator to get in the cabin (15);
a transmitter (31) that is disposed inside the cabin (15) and transmits a first signal (X1);
a portable key (40) configured to be carriable by the operator and capable of receiving the first signal (X1) and transmitting a second signal (X2) that is an authentication signal in response to a reception of the first signal (X1); and
a controller (34) that judges whether or not the portable key (40) corresponds to the construction machine (10) based on the second signal (X2) and brings a drive source (38) of the construction machine (10) into a startup-operation available state when judging that the portable key (40) corresponds to the construction machine (10), the startup-operation available state being a state where an operation for starting up the drive source (38) is available,
**characterized in that**:
the cabin (15) is disposed at a position biassed in a frame width direction, which is a width direction of the body frame (11), with respect to a widthwise frame center line, which is a center line of the body frame (11) in the frame width direction;
the cabin (15) includes a pair of cabin inner side wall (15b) and cabin outer side wall (15c), which are opposed to each other in the frame width direction across a cabin interior space for receiving the operator, the cabin inner side wall (15b) located closer to the widthwise frame center line than the cabin outer side wall (15c), the cabin outer side wall (15c) formed with an entrance (15g) to allow the operator to get in and get out of the cabin interior space through the entrance (15g); and
the transmitter (31) is attached to the cabin inner side wall (15b).

2. The construction machine (10) according to claim 1, wherein
the cabin inner side wall (15b) includes an outer shielding part (19) interposed between an outer space of the cabin inner side wall (15b) and the transmitter (31), and the outer shielding part (19) hinders the first signal (X1) from passing through the outer shielding part (19) from the transmitter (31) to leak out to the outer space.

3. The construction machine (10) according to claim 2, wherein:
The cabin inner side wall (15b) further includes a non-shielding part, which is located at a position deviated from the outer shielding part (19) in a direction along a vertical surface and allows the first signal (X1) to pass through the non-shielding part; and
the cabin (15) further includes an inner shielding part, which is interposed between the non-shielding part and the transmitter (31) in the cabin (15) to hinder the first signal (X1) from reaching the non-shielding part from the transmitter (31) through the inner shielding part.

4. The construction machine (10) according to claim 3, wherein
the non-shielding part includes a transparent plate (18).

5. The construction machine (10) according to claim 3 or 4, wherein
at least a part of the inner shielding part is included in a support member (59) that supports a device for operation of the construction machine (10).

6. The construction machine (10) according to any of claims 3 to 5, wherein
the inner shielding part includes at least one of an upper shielding wall covering the transmitter (31) on an upper side of the transmitter (31), a front shielding wall covering the transmitter (31) on a front side of the transmitter (31), and a rear shielding wall covering the transmitter (31) on a rear side of the transmitter (31).

7. The construction machine (10) according to any of claims 3 to 6, wherein
at least a part of the inner shielding part is included in a reinforcement member (51) disposed along an inner wall surface of the outer shielding part (19) so as to enhance a rigidity of the cabin inner side wall (15b) and interposed between the transmitter (31) and the non-shielding part.

8. The construction machine (10) according to any of claims 3 to 7, wherein
at least a part of the outer shielding part (19) and the inner shielding part is included in a cabin pillar member that stands up on the body frame (11) so as to extend vertically.

9. The construction machine (10) according to any of claims 1 to 8, further comprising a work device (14) capable of performing a working motion, wherein the work device (14) is disposed on the body frame (11) at a position adjacent to the cabin inner side wall (15b) on an outer side of the cabin inner side wall (15b) in the frame width direction.

## Patentansprüche

1. Baumaschine (10) umfassend:
einen Karosserierahmen (11);
eine Kabine (15), die auf dem Karosserierahmen (11) befestigt ist und es einem Bediener ermöglicht, in die Kabine (15) einzusteigen;
einen Sender (31), der im Inneren der Kabine (15) angeordnet ist und ein erstes Signal (X1) sendet;
einen tragbaren Schlüssel (40), der konfiguriert ist, dass er von dem Bediener mitgeführt werden kann, und der das erste Signal (X1) empfangen und als Reaktion auf ein Empfangen des ersten Signals (X1) ein zweites Signal (X2) senden kann, bei dem es sich um ein Authentifizierungssignal handelt; und
eine Steuereinheit (34), die auf der Grundlage des zweiten Signals (X2) beurteilt, ob der tragbare Schlüssel (40) mit der Baumaschine (10) korrespondiert, und die eine Antriebsquelle (38) der Baumaschine (10) in einen für einen Startbetrieb bereiten Zustand versetzt, wenn beurteilt wird, dass der tragbare Schlüssel (40) mit der Baumaschine (10) korrespondiert, wobei der für den Startbetrieb verfügbare Zustand ein Zustand ist, in dem ein Betrieb zum Starten der Antriebsquelle (38) bereit ist,
**dadurch gekennzeichnet, dass**:
die Kabine (15) an einer in einer Rahmenbreitenrichtung, die eine Breitenrichtung des Karosserierahmens (11) ist, versetzten Position in Bezug auf eine Rahmenmittellinie der Breitenrichtung angeordnet ist, die eine Mittellinie des Karosserierahmens (11) in der Rahmenbreitenrichtung ist;
die Kabine (15) ein Paar einer inneren Kabinenseitenwand (15b) und einer äußeren Kabinenseitenwand (15c) aufweist, die in der Rahmenbreitenrichtung über einen Kabineninnenraum zur Aufnahme des Bedieners einander gegenüberliegen, wobei die innere Kabinenseitenwand (15b) näher an der Rahmenmittellinie der Breitenrichtung liegt als die äußere Kabinenseitenwand (15c), wobei die äußere Kabinenseitenwand (15c) mit einem Einstieg (15g) gebildet ist, damit der Bediener durch den Einstieg (15g) in den Kabineninnenraum ein- und aussteigen kann; und
der Sender (31) an der inneren Kabinenseitenwand (15b) befestigt ist.

2. Baumaschine (10) nach Anspruch 1, wobei
die innere Kabinenseitenwand (15b) einen äußeren abschirmenden Teil (19) aufweist, der zwischen einem Außenraum der inneren Kabinenseitenwand (15b) und dem Sender (31) angeordnet ist, und der äußere abschirmende Teil (19) verhindert, dass das erste Signal (X1) von dem Sender (31) den äußeren abschirmenden Teil (19) durchdringt und (31) in den Außenraum gelangt.

3. Baumaschine (10) nach Anspruch 2, wobei:
die innere Kabinenseitenwand (15b) ferner einen nicht abschirmenden Teil aufweist, der sich an einer Position befindet, die in einer Richtung entlang einer vertikalen Fläche von dem äußeren abschirmenden Teil (19) versetzt ist, und der es ermöglicht, dass das erste Signal (X1) den nicht abschirmenden Teil durchdringt; und
die Kabine (15) ferner einen inneren abschirmenden Teil aufweist, der in der Kabine (15) zwischen dem nicht abschirmenden Teil und dem Sender (31) angeordnet ist, um zu verhindern, dass das erste Signal (X1) von dem Sender (31) durch den inneren abschirmenden Teil hindurch den nicht abschirmenden Teil erreicht.

4. Baumaschine (10) nach Anspruch 3, wobei
der nicht abschirmende Teil eine transparente Platte (18) aufweist.

5. Baumaschine (10) nach Anspruch 3 oder 4, wobei
mindestens ein Teil des inneren abschirmenden Teils in einem Stützelement (59) enthalten ist, das eine Vorrichtung zum Betreiben der Baumaschine (10) stützt.

6. Baumaschine (10) nach einem der Ansprüche 3 bis 5, wobei
der innere abschirmende Teil mindestens eine von einer oberen abschirmenden Wand, die den Sender (31) an einer Oberseite des Senders (31) abdeckt, einer vorderen abschirmenden Wand, die den Sender (31) an einer Vorderseite des Senders (31) abdeckt, und einer hinteren abschirmenden Wand, die den Sender (31) an einer Rückseite des Senders (31) abdeckt, aufweist.

7. Baumaschine (10) nach einem der Ansprüche 3 bis 6, wobei
mindestens ein Teil des inneren abschirmenden Teils in einem Verstärkungselement (51) enthalten ist, das entlang einer Innenwandfläche des äußeren abschirmenden Teils (19) angeordnet ist, um eine Steifigkeit der inneren Kabinenseitenwand (15b) zu erhöhen, und das zwischen dem Sender (31) und dem nicht abschirmenden Teil angeordnet ist.

8. Baumaschine (10) nach einem der Ansprüche 3 bis 7, wobei
mindestens ein Teil des äußeren abschirmenden Teils (19) und des inneren abschirmenden Teils in einem Kabinensäulenelement enthalten ist, das sich an dem Karosserierahmen (11) derart erhebt, dass es sich vertikal erstreckt.

9. Baumaschine (10) nach einem der Ansprüche 1 bis 8, die ferner eine Arbeitsvorrichtung (14) umfasst, die eine Arbeitsbewegung ausführen kann, wobei die Arbeitsvorrichtung (14) an dem Karosserierahmen (11) an einer Position neben der der inneren Kabinenseitenwand (15b) an einer Außenseite der inneren Kabinenseitenwand (15b) in der Rahmenbreitenrichtung angeordnet ist.

## Revendications

1. Machine de construction (10) comprenant :
un cadre de corps (11) ;
un habitacle (15) monté sur le cadre de corps (11) et permettant à un opérateur de monter dans l'habitacle (15) ;
un émetteur (31) qui est disposé à l'intérieur de l'habitacle (15) et qui émet un premier signal (X1) ;
une clé portable (40) conçue pour être transportée par l'opérateur et capable de recevoir le premier signal (X1) et d'émettre un deuxième signal (X2), qui est un signal d'authentification, en réponse à la réception du premier signal (X1) ; et
un contrôleur (34) qui détermine si la clé portable (40) correspond ou non à la machine de construction (10) sur la base du deuxième signal (X2) et met une source d'entraînement (38) de la machine de construction (10) dans un état permettant le démarrage lorsqu'il détermine que la clé portable (40) correspond à la machine de construction (10), l'état permettant le démarrage étant un état dans lequel une opération de démarrage de la source d'entraînement (38) est disponible,
**caractérisée en ce que** :
l'habitacle (15) est disposé dans une position décalée dans une direction de largeur de cadre, qui est une direction de largeur du cadre de corps (11), par rapport à une ligne centrale de cadre dans la direction de largeur, qui est une ligne centrale du cadre de corps (11) dans la direction de largeur de cadre ;
l'habitacle (15) comprend une paire de parois latérales intérieures (15b) et extérieures (15c) de l'habitacle, qui sont opposées l'une à l'autre dans la direction de largeur de cadre, de part et d'autre d'un espace intérieur de l'habitacle destiné à accueillir l'opérateur, la paroi latérale intérieure (15b) de l'habitacle étant située plus près de la ligne centrale de cadre dans la direction de largeur que la paroi latérale extérieure (15c) de l'habitacle, la paroi latérale extérieure (15c) de l'habitacle étant pourvue d'une entrée (15g) pour permettre à l'opérateur d'entrer et de sortir de l'espace intérieur de l'habitacle par l'entrée (15g) ; et
l'émetteur (31) est fixé à la paroi latérale intérieure (15b) de l'habitacle.

2. Machine de construction (10) selon la revendication 1, dans laquelle
la paroi latérale intérieure (15b) de l'habitacle comprend une partie de blindage extérieure (19) interposée entre un espace extérieur de la paroi latérale intérieure (15b) de l'habitacle et l'émetteur (31), et la partie de blindage extérieure (19) empêche le premier signal (X1) de traverser la partie de blindage extérieure (19) depuis l'émetteur (31) et de s'échapper vers l'espace extérieur.

3. Machine de construction (10) selon la revendication 2, dans laquelle :
la paroi latérale intérieure (15b) de l'habitacle comprend en outre une partie de non-blindage, qui est située à une position décalée par rapport à la partie de blindage extérieure (19) dans une direction le long d'une surface verticale et permettant au premier signal (X1) de traverser la partie de non-blindage ; et
l'habitacle (15) comprend en outre une partie de blindage intérieure, qui est interposée entre la partie de non-blindage et l'émetteur (31) dans l'habitacle (15) afin d'empêcher le premier signal (X1) d'atteindre la partie de non-blindage depuis l'émetteur (31) à travers la partie de blindage intérieure.

4. Machine de construction (10) selon la revendication 3, dans laquelle la partie de non-blindage comprend une plaque transparente (18).

5. Machine de construction (10) selon la revendication 3 ou 4, dans laquelle
au moins une partie de la partie de blindage intérieure est incluse dans un élément de support (59) qui supporte un dispositif pour faire fonctionner la machine de construction (10).

6. Machine de construction (10) selon l'une des revendications 3 à 5, dans laquelle
la partie de blindage intérieure comprend au moins l'un parmi une paroi de blindage supérieure recouvrant l'émetteur (31) sur un côté supérieur de l'émetteur (31), une paroi de blindage avant recouvrant l'émetteur (31) sur un côté avant de l'émetteur (31), et une paroi de blindage arrière recouvrant l'émetteur (31) sur un côté arrière de l'émetteur (31).

7. Machine de construction (10) selon l'une des revendications 3 à 6, dans laquelle
au moins une partie de la partie de blindage intérieure est incluse dans un élément de renfort (51) disposé le long d'une surface de paroi intérieure de la partie de blindage extérieur (19) de manière à améliorer une rigidité de la paroi latérale intérieure (15b) de l'habitacle et interposé entre l'émetteur (31) et la partie de non-blindage.

8. Machine de construction (10) selon l'une des revendications 3 à 7, dans laquelle
au moins une partie de la partie de blindage extérieur (19) et de la partie de blindage intérieur est incluse dans un élément de montant d'habitacle qui s'élève sur le cadre de corps (11) de manière à s'étendre verticalement.

9. Machine de construction (10) selon l'une des revendications 1 à 8, comprenant en outre un dispositif de travail (14) capable d'effectuer un mouvement de travail, dans lequel le dispositif de travail (14) est disposé sur le cadre de corps (11) à une position adjacente à la paroi latérale intérieure (15b) de l'habitacle sur un côté extérieur de la paroi latérale intérieure (15b) de l'habitacle, dans la direction de largeur de cadre.
